# EUROPEAN PATENT APPLICATION

(11) **EP 4 443 598 A1**
(43) Date of publication of application: **09.10.2024**
(21) Application number: 22950883.3
(22) Date of filing: 11.10.2022
(51) Int. Cl.: H01M 10/42, E02F 9/20, F15B 21/08

(54) **BRAKING ENERGY CONSUMPTION CONTROL METHOD AND APPARATUS, WORK MACHINE, AND ELECTRONIC DEVICE**

(30) Priority: 13.07.2022 CN 202210828545
(71) Applicant: Sany Heavy Machinery Limited, Kunshan, Jiangsu 215000 (CN)
(72) Inventor: WEI, Shengjie, Kunshan, Jiangsu 215000 (CN); CAI, Youshi, Kunshan, Jiangsu 215000 (CN)
(74) Representative: Osterhoff, Utz
(86) International application number: PCT/CN2022/124594
(87) International publication number: WO 2024/011773

(57) **Abstract**

The present application relates to the technical field of working machinery, and provides a method and an apparatus for controlling braking energy consumption, a working machinery and an electronic device. The method includes: (101), obtaining a battery-allowed recharge power, a braking feedback power and a slewing motor speed; (102), controlling a slewing pressure-holding member to open in response to determining that the battery-allowed recharge power does not meet a slewing braking requirement based on the battery-allowed recharge power and the braking feedback power; and (103), controlling an opening degree of the slewing pressure-holding member based on the slewing motor speed to consume electric slewing braking energy. When the battery is not allowed to be recharged, the electric slewing braking energy can be consumed in time by controlling the opening degree of the slewing pressure-holding member.

## Description

### CROSS-REFERENCE TO RELATED APPLICATIONS

The present application claims priority to Chinese patent application No. 2022108285456, filed on July 13, 2022, and entitled "METHOD AND APPARATUS FOR CONTROLLING BRAKING ENERGY CONSUMPTION, WORKING MACHINERY AND ELECTRONIC DEVICE", which is incorporated herein by reference in its entirety.

### TECHNICAL FIELD

The present application relates to the technical field of working machinery, and in particular to a method and an apparatus for controlling braking energy consumption, a working machinery and an electronic device.

### BACKGROUND

With the continuous development of electrification of working machinery, the slewing action of working machinery has gradually changed from hydraulic drive to electric drive. The electric slewing braking process is usually realized by reverse power generation of the motor. However, when the battery is not allowed to be recharged, the energy generated by the slewing braking cannot be consumed in time, which is easy to cause damage to the slewing apparatus and affect the service life of the slewing apparatus.

Therefore, the consumption of electric slewing braking energy is an important issue that the industry needs to solve urgently.

### SUMMARY

The present application provides a method and an apparatus for controlling braking energy consumption, a working machinery and an electronic device, aiming to solve the defects in the related art that when the battery is not allowed to be recharged, the energy generated by the slewing braking cannot be consumed in time, which is easy to cause damage to the slewing apparatus and affect the service life of the slewing apparatus.

In a first aspect, the present application provides a method for controlling braking energy consumption, including:
obtaining a battery-allowed recharge power, a braking feedback power and a slewing motor speed;
controlling a slewing pressure-holding member to open in response to determining that the battery-allowed recharge power does not meet a slewing braking requirement based on the battery-allowed recharge power and the braking feedback power, wherein the slewing pressure-holding member is provided in a hydraulic loop connected to a slewing apparatus; and
controlling an opening degree of the slewing pressure-holding member based on the slewing motor speed to consume electric slewing braking energy.

According to the method for controlling braking energy consumption provided by the present application, determining that the battery-allowed recharge power does not meet the slewing braking requirement includes:
in response to that the battery-allowed recharge power is less than the braking feedback power, determining that the battery-allowed recharge power does not meet the slewing braking requirement.

According to the method for controlling braking energy consumption provided by the present application, controlling the opening degree of the slewing pressure-holding member based on the slewing motor speed includes:
in a slewing start-up phase, determining the opening degree of the slewing pressure-holding member corresponding to the slewing motor speed at each moment based on a preset mapping relationship between the slewing motor speed and the opening degree of the slewing pressure-holding member;
determining a maximum opening degree of the slewing pressure-holding member in the slewing start-up phase based on the opening degree of the slewing pressure-holding member at each moment; and
in a slewing braking phase, controlling the opening degree of the slewing pressure-holding member based on the maximum opening degree of the slewing pressure-holding member and the slewing motor speed.

According to the method for controlling braking energy consumption provided by the present application, controlling the opening degree of the slewing pressure-holding member based on the maximum opening degree of the slewing pressure-holding member and the slewing motor speed includes:
comparing the slewing motor speed with a preset slewing speed threshold to obtain a comparison result; and
controlling the opening degree of the slewing pressure-holding member to reduce step by step from the maximum opening degree based on the comparison result.

According to the method for controlling braking energy consumption provided by the present application, controlling the opening degree of the slewing pressure-holding member to reduce step by step from the maximum opening degree based on the comparison result includes:
in response to that the slewing motor speed is higher than a first slewing speed threshold, controlling the opening degree of the slewing pressure-holding member to be at the maximum opening degree;
in response to that the slewing motor speed is higher than a second slewing speed threshold and lower than the first slewing speed threshold, controlling the opening degree of the slewing pressure-holding member to be at a first opening degree set value; and
in response to that the slewing motor speed is equal to the second slewing speed threshold, controlling the opening degree of the slewing pressure-holding member to be at a second opening degree set value;
the first opening degree set value is smaller than the maximum opening degree, and the second opening degree set value is smaller than the first opening degree set value.

According to the method for controlling braking energy consumption provided by the present application, after the battery-allowed recharge power does not meet the slewing braking requirement, the method further includes:
reducing a maximum value of the slewing motor speed under a present level.

According to the method for controlling braking energy consumption provided by the present application, reducing the maximum value of the slewing motor speed under the present level includes:
determining a maximum theoretical consumption power in response to that the slewing pressure-holding member is at the maximum opening degree under the present level;
determining the corresponding slewing motor speed based on the maximum theoretical consumption power; and
reducing the maximum value of the slewing motor speed under the present level to the slewing motor speed corresponding to the maximum theoretical consumption power.

In a second aspect, the present also provides an apparatus for controlling braking energy consumption, including:
an obtaining module configured for obtaining a battery-allowed recharge power, a braking feedback power and a slewing motor speed;
a first processing module configured for controlling a slewing pressure-holding member to open in response to determining that the battery-allowed recharge power does not meet a slewing braking requirement based on the battery-allowed recharge power and the braking feedback power, the slewing pressure-holding member is provided in a hydraulic loop connected to a slewing apparatus; and
a second processing module configured for controlling an opening degree of the slewing pressure-holding member based on the slewing motor speed to consume electric slewing braking energy.

In a third aspect, the present application also provides a working machine using the method for controlling braking energy consumption or including the apparatus for controlling braking energy consumption.

In a fourth aspect, the present application also provides an electronic device, including a memory, a processor and a computer program stored in the memory and executable on the processor, when the program is executed by the processor, the method for controlling braking energy consumption is implemented.

The method and the apparatus for controlling braking energy consumption, the working machinery and the electronic device provided by the present application obtain the battery-allowed recharge power, the braking feedback power and the slewing motor speed, and when determining the battery-allowed recharge power does not meet the slewing braking requirement, control the slewing pressure-holding member to open, and control the opening degree of the slewing pressure-holding member based on the slewing motor speed to consume the electric slewing braking energy, so that when the battery is not allowed to be recharged, the electric slewing braking energy can be consumed in time by controlling the opening degree of the slewing pressure-holding member, thereby greatly reducing the damage to the slewing apparatus caused by the failure to consume the electric slewing braking energy in time.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a flowchart of a method for controlling braking energy consumption provided by the present application.
FIG. 2 is a schematic view of a mapping relationship between a slewing motor speed and an opening degree of a slewing pressure-holding member according to an embodiment of the present application.
FIG. 3 is a structural view of an apparatus for controlling braking energy consumption provided by the present application.
FIG. 4 is a structural view of an electronic device provided by the present application.

### DETAILED DESCRIPTION OF THE EMBODIMENTS

In order to illustrate the technical solutions in the embodiments of the present application, the following briefly introduces the accompanying drawings required for the description of the embodiments. Obviously, the drawings in the following description are only part of embodiments of the present application. For those skilled in the art, other drawings can also be obtained according to the structures shown in these drawings without any creative effort.

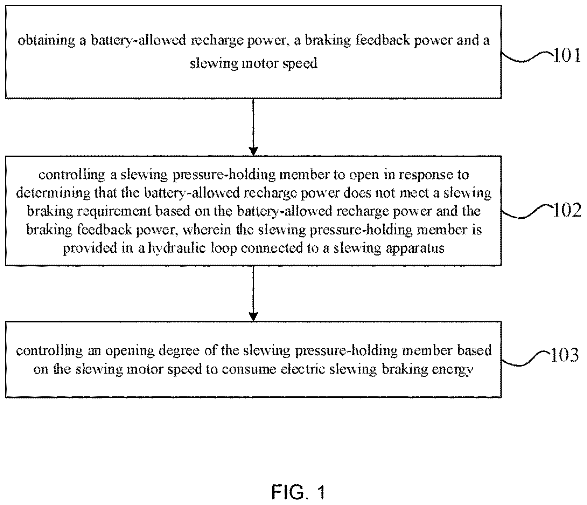

With reference to FIG. 1 to FIG. 4, the following describes a method for controlling braking energy consumption, an apparatus, a working machinery and an electronic device provided by the embodiment of the present application.

FIG. 1 shows a method for controlling braking energy consumption according to an embodiment of the present application, which includes:
Step 101: obtaining a battery-allowed recharge power, a braking feedback power and a slewing motor speed.
Step 102: controlling a slewing pressure-holding member to open in response to determining that the battery-allowed recharge power does not meet a slewing braking requirement based on the battery-allowed recharge power and the braking feedback power, wherein the slewing pressure-holding member is provided in a hydraulic loop connected to a slewing apparatus.
Step 103: controlling an opening degree of the slewing pressure-holding member based on the slewing motor speed to consume electric slewing braking energy.

The application scenario targeted by this embodiment is a scenario where the slewing apparatus is controlled by electric drive. In this scenario, the slewing apparatus is driven by a slewing motor, and the slewing motor can be controlled by an electric signal sent by a controller. The slewing motor can also be powered by a battery. Of course, during the slewing braking process, the energy generated by the slewing braking can also be fed back to the battery by electric energy recovery. However, when the battery does not allow recharging, such as when the current battery is fully charged and cannot receive and store more electric energy, the energy generated by the slewing braking cannot be consumed by battery recharging. It is necessary to add an additional energy consumption path to consume the energy generated by the slewing braking in time.

The execution subject of the method for controlling braking energy consumption provided in this embodiment can be the above-mentioned controller, which can be a vehicle controller on the working machinery or a controller added to achieve energy consumption control. The specific setting can be reasonably provided according to actual needs.

In actual application process, the battery-allowed recharge power can be obtained based on the present working state of the battery. The battery-allowed recharge power can be the maximum power value that the battery can allow to input under the present working state.

The braking feedback power can be determined by the present working level of the slewing apparatus and the current slewing motor speed. The braking feedback power can be the power value that can be fed back to the battery from the energy generated by the braking process when the slewing apparatus is from the present working state to the stopped state. The slewing motor speed is the real-time speed value of the slewing motor during operation.

In this embodiment, the slewing pressure-holding member is provided in the hydraulic loop connected to the slewing apparatus. Since the slewing drive mode is changed from the traditional hydraulic drive to the electric drive, the original hydraulic loop can still be retained. Therefore, the overflow valve in the main valve of the hydraulic loop can be used as the slewing pressure-holding member. The opening degree of the slewing pressure-holding member can be controlled by controlling the opening degree of the overflow valve in the main valve. Of course, in the actual application process, the slewing pressure-holding member can also be provided by externally mounting an overflow valve on the basis of the original slewing oil loop.

In the scenario with low control accuracy requirements, the function of the slewing pressure-holding member can also be realized by externally attaching a throttle hole on the basis of the original slewing oil loop. However, in this case, since the aperture of the throttle hole needs to be preset, which can be set to the aperture value corresponding to the slewing pressure-holding member in the maximum opening degree. In this case, the adjustment of the slewing pressure-holding member opening degree cannot be realized, but the excess energy generated by the slewing braking in the state where the battery does not allow recharge can still be effectively consumed.

In an embodiment, determining that the battery-allowed recharge power does not meet the slewing braking requirement can be specifically achieved in the following manner:
in response to that the battery-allowed recharge power is less than the braking feedback power, determining that the battery-allowed recharge power does not meet the slewing braking requirement.

In this embodiment, the battery-allowed recharge power does not meet the slewing braking requirement, which means that the energy the battery can receive is less than the energy that needs to be fed back to the battery by the slewing braking, that is, the battery-allowed recharge power is less than the braking feedback power. At this time, there will be a problem of excess energy overflow, and the excess energy needs to be consumed in time by the method provided in this embodiment.

In an embodiment, controlling the opening degree of the slewing pressure-holding member based on the slewing motor speed may specifically include:
in a slewing start-up phase, determining the opening degree of the slewing pressure-holding member corresponding to the slewing motor speed at each moment based on a preset mapping relationship between the slewing motor speed and the opening degree of the slewing pressure-holding member;
determining a maximum opening degree of the slewing pressure-holding member in the slewing start-up phase based on the opening degree of the slewing pressure-holding member at each moment; and
in a slewing braking phase, controlling the opening degree of the slewing pressure-holding member based on the maximum opening degree of the slewing pressure-holding member and the slewing motor speed.

In this embodiment, the preset mapping relationship between the slewing motor speed and the opening degree of the slewing pressure-holding member may be predetermined, and specifically, the preset mapping relationship may be obtained by controlling the slewing apparatus to work at different slewing motor speeds under different working levels and calibrating the opening degree of the slewing pressure holding member.

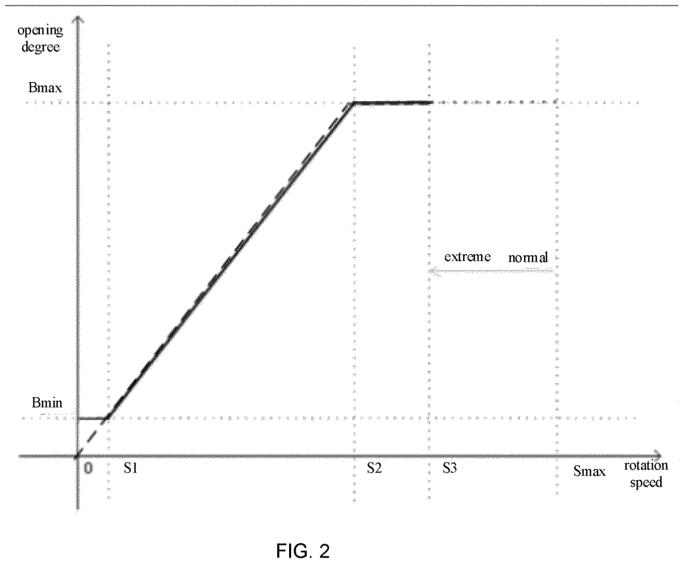

FIG. 2 shows a preset mapping relationship between the slewing motor speed and the opening degree of slewing pressure-holding member. The horizontal axis is the slewing motor speed, the vertical axis is the opening degree of slewing pressure-holding member, the dotted line represents the mapping relationship between the slewing motor speed and the opening degree of the slewing pressure-holding member during the acceleration of the slewing apparatus, and the solid line represents the mapping relationship between the slewing motor speed and the opening degree of the slewing pressure-holding member during the deceleration of the slewing apparatus.

The above preset mapping relationship can also be presented in a one-dimensional MAP table. Regardless of the presentation method, the above preset mapping relationship shows that the greater the speed value of the slewing motor speed, the greater the opening degree of the slewing pressure-holding member.

After obtaining the above preset mapping relationship, in the slewing start-up phase, the opening degree of the slewing pressure-holding member at each moment can be obtained according to the slewing motor speed at different moments in the present working level, and the maximum opening degree of the slewing pressure-holding member in the slewing start-up phase can be obtained.

After entering the slewing braking phase, the opening degree of the slewing pressure-holding member can be reasonably controlled according to the maximum opening degree and the slewing motor speed obtained in real time, so as to ensure that the excess energy generated by the slewing braking phase can be consumed in time.

Based on the above embodiment, controlling the opening degree of the slewing pressure-holding member based on the maximum opening degree of the slewing pressure-holding member and the slewing motor speed specifically includes:
comparing the slewing motor speed with a preset slewing speed threshold to obtain a comparison result; and
controlling the opening degree of the slewing pressure-holding member to reduce step by step from the maximum opening degree based on the comparison result.

In this embodiment, multiple slewing speed thresholds can be preset, and multiple slewing speed threshold ranges can be defined by two adjacent slewing speed thresholds. Different slewing speed threshold ranges correspond to different opening degrees of the slewing pressure-holding member, so as to control the opening degree of the slewing pressure-holding member to reduce step by step from the maximum opening degree, thereby ensuring the safety and stability of the energy consumption control during the slewing braking process.

Based on the above embodiment, controlling the opening degree of the slewing pressure-holding member to reduce step by step from the maximum opening degree based on the comparison result may specifically include:
in response to that the slewing motor speed is higher than the first slewing speed threshold, controlling the opening degree of the slewing pressure-holding member to be at the maximum opening degree;
in response to that the slewing motor speed is higher than the second slewing speed threshold and lower than the first slewing speed threshold, controlling the opening degree of the slewing pressure-holding member to a first opening degree set value; and
in response to that the slewing motor speed is equal to the second slewing speed threshold, controlling the opening degree of the slewing pressure-holding member to the second opening degree set value.

The first opening degree set value is less than the maximum opening degree, and the second opening degree set value is less than the first opening degree set value.

In this embodiment, the first slewing speed threshold is higher than the second slewing speed threshold, and the maximum opening degree, the first opening degree set value, and the second opening degree set value are successively reduced, so that the opening degree of the slewing pressure-holding member can be gradually reduced as the slewing motor speed decreases. When the slewing motor speed is 0, the opening degree of the slewing pressure-holding member is also 0. Specifically, in the slewing braking phase, the maximum opening degree can be first maintained until the slewing motor speed is lower than the first slewing speed threshold, and the opening degree of the slewing pressure-holding member can be maintained at the first opening degree set value until the slewing motor speed drops to 0, then the opening degree value of the slewing pressure-holding member is set to 0.

Referring to FIG. 2, the maximum opening degree is Bₘₐₓ, the first opening degree set value can be Bₘᵢₙ in FIG. 2, the second opening degree set value can be 0, the maximum value of the slewing motor speed in this state is Sₘₐₓ, the first slewing speed threshold can be S₂ in FIG. 2, and the second slewing speed threshold can be 0 or S₁ in FIG. 2. Of course, the specific values of the above slewing speed threshold and the specific values of the opening degree set value can be reasonably provided according to the actual application requirements, and no further details are given here.

In an embodiment, after determining that the battery-allowed recharge power does not meet the slewing braking requirement, the method can also include:
reducing the maximum value of the slewing motor speed under the present level.

Under the present working level, in response to that it is determined that the battery-allowed recharge power does not meet the slewing braking requirement, that is, the slewing braking energy overflow problem occurs, in order to ensure the safety of the slewing braking process, the maximum value of the slewing motor speed under the present level can be immediately reduced. Taking the situation shown in FIG. 2 as an example, the maximum value of the slewing motor speed under the present level is Smax. At this time, the maximum value of the slewing motor speed Smax can be reduced to S3. The reduction process of the maximum value of the slewing motor speed can refer to the direction indicated by the arrow from the normal state to the extreme state in FIG. 2.

In the actual application process, the maximum value of the slewing motor speed under the normal state and the maximum value of the slewing motor speed under the extreme state corresponding to each working level can be preset. After determining that the battery-allowed recharge power does not meet the slewing braking requirement, the maximum value of the slewing motor speed under the normal state can be directly reduced to the maximum value of the slewing motor speed under the extreme state.

Of course, the maximum value of the reduced slewing motor speed may also be gradually calculated according to the maximum theoretical power that can be consumed when the slewing pressure-holding member is at the maximum opening degree under the present working level, and this process may be specifically implemented through the process provided in the following embodiment.

Based on the above embodiment, reducing the maximum value of the slewing motor speed under the present level may specifically include:
determining the maximum theoretical power that can be consumed when the slewing pressure-holding member is at the maximum opening degree under the present level;
determining the corresponding slewing motor speed based on the maximum theoretical power; and
reducing the maximum value of the slewing motor speed under the present level to the slewing motor speed corresponding to the maximum theoretical power.

In the actual application process, based on the maximum theoretical power and the maximum torque of the slewing process, the corresponding slewing motor speed can be calculated, so that the maximum value of the slewing motor speed after the reduction can be accurately obtained according to the actual working state, thereby improving the control accuracy and control reliability of the braking energy consumption control process.

The apparatus for controlling braking energy consumption provided by the present application is described below, and the apparatus for controlling braking energy consumption described below and the method for controlling braking energy consumption described above can be referred to each other.

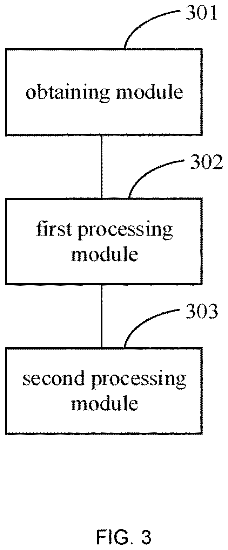

FIG. 3 shows an apparatus for controlling braking energy consumption provided by an embodiment of the present application, and the apparatus includes: an obtaining module 301, a first processing module 302, and a second processing module 303.

The obtaining module 301 is configured to obtain a battery-allowed recharge power, a braking feedback power and a slewing motor speed.

The first processing module 302 is configured to control the slewing pressure-holding member to open in response to determining the battery-allowed recharge power does not meet the slewing braking requirement based on the battery-allowed recharge power and the braking feedback power; and the slewing pressure-holding member is provided in a hydraulic loop connected to the slewing apparatus.

The second processing module 303 is configured to control the opening degree of the slewing pressure-holding member based on the slewing motor speed to consume electric slewing braking energy.

In an embodiment, the first processing module 302 can specifically realize determining the battery-allowed recharge power does not meet the slewing braking requirement in the following manner:
in response to that the battery-allowed recharge power is less than the braking feedback power, determining the battery-allowed recharge power does not meet the slewing braking requirement.

In an embodiment, the second processing module 303 can specifically control the opening degree of the slewing pressure-holding member based on the slewing motor speed in the following manner:
in a slewing start-up phase, determining the opening degree of the slewing pressure-holding member corresponding to the slewing motor speed at each moment based on a preset mapping relationship between the slewing motor speed and the opening degree of the slewing pressure-holding member;
determining a maximum opening degree of the slewing pressure-holding member in the slewing start-up phase based on the opening degree of the slewing pressure-holding member at each moment; and
in a slewing braking phase, controlling the opening degree of the slewing pressure-holding member based on the maximum opening degree of the slewing pressure-holding member and the slewing motor speed.

In an embodiment, the second processing module 303 can specifically realize controlling the opening degree of the slewing pressure-holding member based on the maximum opening degree of the slewing pressure-holding member and the slewing motor speed in the following manner:
comparing the slewing motor speed with the preset slewing speed threshold to obtain a comparison result; and
controlling the opening degree of the slewing pressure-holding member to reduce step by step from the maximum opening degree based on the comparison result.

In an embodiment, the second processing module 303 can specifically realize controlling the opening degree of the slewing pressure-holding member reduce step by step from the maximum opening degree based on the comparison result in the following manner:
in response to that the slewing motor speed is higher than the first slewing speed threshold, controlling the opening degree of the slewing pressure-holding member to be at the maximum opening degree;
in response to that the slewing motor speed is higher than the second slewing speed threshold and lower than the first slewing speed threshold, controlling the opening degree of the slewing pressure-holding member to the first opening degree set value; and
in response to that the slewing motor speed is equal to the second slewing speed threshold, controlling the opening degree of the slewing pressure-holding member to the second opening degree set value.

The first opening degree set value is less than the maximum opening degree, and the second opening degree set value is less than the first opening degree set value.

In an embodiment, the apparatus for controlling braking energy consumption can also include:
a third processing module configured for reducing the maximum value of the slewing motor speed under the present level.

In an embodiment, the third processing module can be specifically configured to:
determine the maximum theoretical power that can be consumed when the slewing pressure-holding member is at the maximum opening degree under the present level;
determine the corresponding slewing motor speed based on the maximum theoretical power; and
reduce the maximum value of the slewing motor speed under the present level to the slewing motor speed corresponding to the maximum theoretical power.

It can be seen that the apparatus for controlling braking energy consumption provided in the embodiment of the present application obtains the battery-allowed recharge power, the braking feedback power and the slewing motor speed through the obtaining module, and when the battery-allowed recharge power does not meet the slewing braking requirement through the first processing module, the slewing pressure-holding member is controlled to open, and the opening degree of the slewing pressure-holding member is controlled based on the slewing motor speed through the second processing module to consume the electric slewing braking energy, so that when the battery is not allowed to be recharged, the electric slewing braking energy can be consumed in time by controlling the opening degree of the slewing pressure-holding member, thereby greatly reducing the damage to the slewing apparatus caused by the failure to consume the electric slewing braking energy in time.

In addition, the present application also provides an working machinery, which uses the above-mentioned method for controlling braking energy consumption or includes the above-mentioned apparatus for controlling braking energy consumption.

It should be noted that the working machinery in this embodiment may be a working machinery with a slewing apparatus such as an excavator and a crane, and the slewing apparatus may be driven to work by electric drive, and an original hydraulic loop may exist.

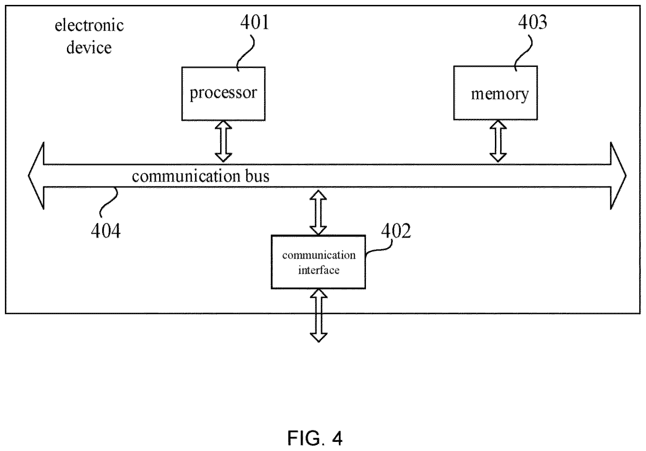

FIG. 4 illustrates a schematic view of a physical structure of an electronic device. As shown in FIG. 4, the electronic device may include: a processor 401, a communication interface 402, a memory 403, and a communication bus 404. The processor 401, the communication interface 402, and the memory 403 are in communication with each other through the communication bus 404. The processor 401 can call the logic instructions in the memory 403 to execute the method for controlling braking energy consumption, the method including: obtaining the battery-allowed recharge power, the braking feedback power and the slewing motor speed; in response to that the battery-allowed recharge power does not meet the slewing braking requirement based on the battery-allowed recharge power and the braking feedback power, controlling the slewing pressure-holding member provided in a hydraulic loop connected to the slewing apparatus to open; and controlling the opening degree of the slewing pressure-holding member based on the slewing motor speed to consume the electric slewing braking energy.

In addition, the logic instructions in the memory 403 can be implemented in the form of a software functional unit and can be stored in a computer-readable storage medium when it is sold or used as an independent product. Based on such understanding, the technical solution of the present application can be essentially or partly embodied in the form of a software product that contributes to the related art or part of the technical solution, which is stored in a storage medium and includes a number of instructions for a computer apparatus (which can be a personal computer, a server, or a network apparatus, etc.) to perform all or part of the steps of the method described in each embodiment of the present application. The aforementioned storage medium includes: the U disk, the mobile hard disk, the read-only memory (ROM), the random access memory (RAM), the disk or the optical disk and other media that can store program codes.

On the other hand, the present application also provides a computer program product including a computer program stored on a non-transitory computer-readable storage medium, and the computer program includes program instructions. When the program instructions are executed by the computer, the computer can execute the method for controlling braking energy consumption provided by the above embodiments, the method includes: obtaining the battery-allowed recharge power, the braking feedback power and the slewing motor speed; in response to that the battery-allowed recharge power does not meet the slewing braking requirement based on the battery-allowed recharge power and the braking feedback power, controlling the slewing pressure-holding member provided in a hydraulic loop connected to the slewing apparatus to open; and controlling the opening degree of the slewing pressure-holding member based on the slewing motor speed to consume the electric slewing braking energy.

On the other hand, the present application also provides a non-transitory computer-readable storage medium, on which a computer program is stored. When the computer program is executed by a processor, the method for controlling braking energy consumption provided in the above embodiments is implemented, the method including: obtaining the battery-allowed recharge power, the braking feedback power and the slewing motor speed; in response to that the battery-allowed recharge power does not meet the slewing braking requirement based on the battery-allowed recharge power and the braking feedback power, controlling the slewing pressure-holding member provided in a hydraulic loop connected to the slewing apparatus to open; and controlling the opening degree of the slewing pressure-holding member based on the slewing motor speed to consume the electric slewing braking energy.

The apparatus embodiments described above are merely schematic, and the units described as separate components may or may not be physically separated. The components displayed as units may or may not be physical units, that is, they may be provided in one place, or they may be distributed on multiple network units. Some or all of the modules may be selected according to actual needs to achieve the purpose of the scheme of this embodiment. Those skilled in the art can understand and implement without creative efforts.

Through the description of the above implementation methods, those skilled in the art can clearly understand that each implementation method can be implemented by means of software plus the necessary general hardware platform, and of course, it can also be implemented by hardware. Based on this understanding, the above technical solution is essentially or the part that contributes to the related art can be embodied in the form of a software product, and the computer software product can be stored in a computer-readable storage medium, such as the ROM/RAM, the disk, the optical disk, etc., including a number of instructions to enable a computer apparatus (which can be a personal computer, a server, or a network apparatus, etc.) to execute the methods described in each embodiment or some parts of the embodiment.

Finally, it should be noted that the above embodiments are only used to illustrate the technical solutions of the present application, not to limit them. Although the present application is described in detail with reference to the above embodiments, those skilled in the art should understand that they can still modify the technical solutions recorded in the above embodiments, or replace some of the technical features therein by equivalent; and these modifications or replacements do not make the essence of the corresponding technical solutions deviate from the spirit and scope of the technical solutions of the embodiments of the present application.

## Claims

1. A method for controlling braking energy consumption, **characterized by** comprising:
obtaining a battery-allowed recharge power, a braking feedback power and a slewing motor speed;
controlling a slewing pressure-holding member to open in response to determining that the battery-allowed recharge power does not meet a slewing braking requirement based on the battery-allowed recharge power and the braking feedback power, wherein the slewing pressure-holding member is provided in a hydraulic loop connected to a slewing apparatus; and
controlling an opening degree of the slewing pressure-holding member based on the slewing motor speed to consume electric slewing braking energy.

2. The method for controlling braking energy consumption according to claim 1, wherein determining that the battery-allowed recharge power does not meet the slewing braking requirement comprises:
in response to that the battery-allowed recharge power is less than the braking feedback power, determining that the battery-allowed recharge power does not meet the slewing braking requirement.

3. The method for controlling braking energy consumption according to claim 1, wherein controlling the opening degree of the slewing pressure-holding member based on the slewing motor speed comprises:
in a slewing start-up phase, determining the opening degree of the slewing pressure-holding member corresponding to the slewing motor speed at each moment based on a preset mapping relationship between the slewing motor speed and the opening degree of the slewing pressure-holding member;
determining a maximum opening degree of the slewing pressure-holding member in the slewing start-up phase based on the opening degree of the slewing pressure-holding member at each moment; and
in a slewing braking phase, controlling the opening degree of the slewing pressure-holding member based on the maximum opening degree of the slewing pressure-holding member and the slewing motor speed.

4. The method for controlling braking energy consumption according to claim 3, wherein controlling the opening degree of the slewing pressure-holding member based on the maximum opening degree of the slewing pressure-holding member and the slewing motor speed comprises:
comparing the slewing motor speed with a preset slewing speed threshold to obtain a comparison result; and
controlling the opening degree of the slewing pressure-holding member to reduce step by step from the maximum opening degree based on the comparison result.

5. The method for controlling braking energy consumption according to claim 4, wherein controlling the opening degree of the slewing pressure-holding member to reduce step by step from the maximum opening degree based on the comparison result comprises:
in response to that the slewing motor speed is higher than a first slewing speed threshold, controlling the opening degree of the slewing pressure-holding member to be at the maximum opening degree;
in response to that the slewing motor speed is higher than a second slewing speed threshold and lower than the first slewing speed threshold, controlling the opening degree of the slewing pressure-holding member to be at a first opening degree set value; and
in response to that the slewing motor speed is equal to the second slewing speed threshold, controlling the opening degree of the slewing pressure-holding member to be at a second opening degree set value;
wherein the first opening degree set value is smaller than the maximum opening degree, and the second opening degree set value is smaller than the first opening degree set value.

6. The method for controlling braking energy consumption according to claim 1, wherein after the battery-allowed recharge power does not meet the slewing braking requirement, the method further comprises:
reducing a maximum value of the slewing motor speed under a present level.

7. The method for controlling braking energy consumption according to claim 6, wherein reducing the maximum value of the slewing motor speed under the present level comprises:
determining a maximum theoretical consumption power in response to that the slewing pressure-holding member is at the maximum opening degree under the present level;
determining the corresponding slewing motor speed based on the maximum theoretical consumption power; and
reducing the maximum value of the slewing motor speed under the present level to the slewing motor speed corresponding to the maximum theoretical consumption power.

8. An apparatus for controlling braking energy consumption, **characterized by** comprising:
an obtaining module configured for obtaining a battery-allowed recharge power, a braking feedback power and a slewing motor speed;
a first processing module configured for controlling a slewing pressure-holding member to open in response to determining that the battery-allowed recharge power does not meet a slewing braking requirement based on the battery-allowed recharge power and the braking feedback power, wherein the slewing pressure-holding member is provided in a hydraulic loop connected to a slewing apparatus; and
a second processing module configured for controlling an opening degree of the slewing pressure-holding member based on the slewing motor speed to consume electric slewing braking energy.

9. A working machine **characterized by** using the method for controlling braking energy consumption according to any one of claims 1 to 7 or comprising the apparatus for controlling braking energy consumption according to claim 8.

10. An electronic device, **characterized by** comprising a memory, a processor and a computer program stored in the memory and executable on the processor, wherein when the program is executed by the processor, the method for controlling braking energy consumption according to any one of claims 1 to 7 is implemented.
